# EUROPEAN PATENT APPLICATION

(11) **EP 4 317 333 A1**
(43) Date of publication of application: **07.02.2024**
(21) Application number: 22780422.6
(22) Date of filing: 23.03.2022
(51) Int. Cl.: C09D 129/06, B32B 27/18, B32B 27/30, C09D 7/63

(54) **COATING AGENT, COATING FILM, AND LAMINATED PACKAGING MATERIAL**

(30) Priority: 30.03.2021 JP 2021058677
(71) Applicant: SEKISUI CHEMICAL CO., LTD., Osaka-shi Osaka 530-8565 (JP)
(72) Inventor: CHITOU, Takahisa, Chita-gun, Aichi 470-2196 (JP)
(74) Representative: Ter Meer Steinmeister & Partner
(86) International application number: PCT/JP2022/013704
(87) International publication number: WO 2022/210208

(57) **Abstract**

A coating agent comprising an amine-modified polyvinyl alcohol and at least one compound (A) selected from the group consisting of a compound (A1) represented by formula (1) below and a compound (A2) represented by formula (2) below: wherein R¹ to R⁶ and R¹¹ to R¹⁸ each independently represent any of a carboxyl group, a sulfo group, a hydrogen atom, an alkyl group having 1 to 6 carbon atoms, an aryl group having 6 to 12 carbon atoms, and a halogen atom, one of R¹ to R⁶ is any of a carboxyl group and a sulfo group, two or three of R¹ to R⁶ are each a hydroxyl group, one of R¹¹ to R¹⁸ is any of a carboxyl group and a sulfo group, and two or three of R¹¹ to R¹⁸ are each a hydroxyl group.

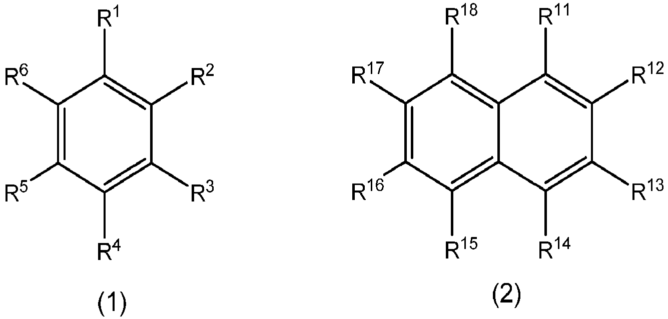

## Description

### Technical Field

The present invention relates to a coating agent, a coating film used as a gas barrier layer, and a laminated packaging material including a coating film.

### Background Art

It is known that amine-modified polyvinyl alcohols such as vinyl alcohol-vinyl amine copolymers have high oxygen barrier properties, for example, as disclosed in Patent Literature 1 and excellent adhesiveness among polyvinyl alcohol-based resins and can be applied to form films on plastic films without using anchor agents. Therefore, they are increasingly being used as gas barrier layers in food packaging applications.

Conventionally, it is known to blend an inorganic layered compound in a gas barrier layer containing a vinyl alcohol-vinyl amine copolymer for enhancing oxygen barrier properties under high humidity, for example, as disclosed in Patent Literatures 2 and 3.

### Citation List

### Patent Literatures

PTL 1: JP 5669738 B
PTL 2: JP 6592224 B
PTL 3: JP 2018-149779 A

### Summary of Invention

### Technical Problem

However, an amine-modified polyvinyl alcohol has a low water resistance because its basic skeleton is polyvinyl alcohol. Therefore, a coating film formed from an amine-modified polyvinyl alcohol easily peels off, swells, and loses its function as a packaging material, when moisture adheres or when packaging an article containing a large amount of moisture. Therefore, applications are limited to the fields of the food, such as dried foods and unbaked sweets, that do not contain much moisture and do not require boiling sterilization or retort sterilization.

Further, use of crosslinking agents such as titanium chelate, boric acid, epichlorohydrin, and aldehydes have been studied, for example, for improving the water resistance of polyvinyl alcohol. However, when such a crosslinking agent is used in a coating agent containing an amine-modified polyvinyl alcohol, the coating agent tends to gelate, and it is difficult to impart a sufficient water resistance.

Meanwhile, when an inorganic layered compound is contained in a coating agent, as disclosed in Patent Literatures 2 and 3, although the oxygen barrier properties are enhanced under high humidity, a sufficient water resistance cannot be imparted, and the transparency also decreases.

Therefore, it is an object of the present invention to provide a coating agent in which the water resistance of a coating film to be formed from the coating agent containing an amine-modified polyvinyl alcohol can be improved, the coating film does not peel off when used for various applications, and good gas barrier properties can be maintained.

### Solution to problem

As a result of diligent studies, the inventor has found that the above problems can be solved by blending a compound (A) having a specific structure in a coating agent containing an amine-modified polyvinyl alcohol, thereby accomplishing the present invention below. That is, the present invention provides [1] to [22] below.
[1] A coating agent comprising: an amine-modified polyvinyl alcohol; and at least one compound (A) selected from the group consisting of a compound (A1) represented by formula (1) below and a compound (A2) represented by formula (2) below: 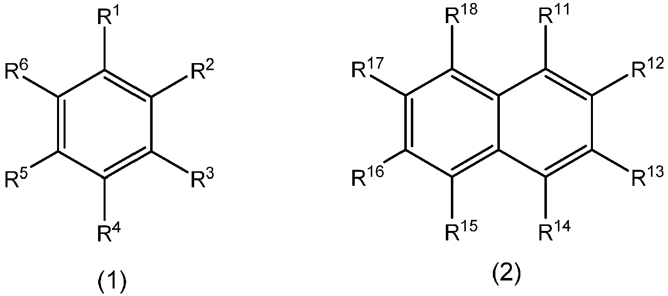 wherein in formula (1), R¹ to R⁶ each independently represent any of a carboxyl group, a sulfo group, hydroxyl group, a hydrogen atom, an alkyl group having 1 to 6 carbon atoms, an aryl group having 6 to 12 carbon atoms, and a halogen atom, one of R¹ to R⁶ is any of a carboxyl group and a sulfo group, and two or three of R¹ to R⁶ are each a hydroxyl group, and wherein in formula (2), R¹¹ to R¹⁸ each independently represent any of a carboxyl group, a sulfo group, hydroxyl group, a hydrogen atom, an alkyl group having 1 to 6 carbon atoms, an aryl group having 6 to 12 carbon atoms, and a halogen atom, one of R¹¹ to R¹⁸ is any of a carboxyl group and a sulfo group, and two or three of R¹¹ to R¹⁸ are each a hydroxyl group.
[2] The coating agent according to [1] above, wherein the compound (A) is the compound (A1).
[3] The coating agent according to [2] above, wherein the compound (A) is at least one benzoic acids selected from the group consisting of dihydroxybenzoic acid and trihydroxybenzoic acid.
[4] The coating agent according to [3] above, wherein the benzoic acids is at least one selected from the group consisting of 2,4-dihydroxybenzoic acid, 3,4-dihydroxybenzoic acid, 3,5-dihydroxybenzoic acid, 3,4,5-trihydroxybenzoic acid, and 2,4,6-trihydroxybenzoic acid.
[5] The coating agent according to any one of [1] to [4] above, wherein the blending amount of the compound (A) is 30 parts by mass or less with respect to 100 parts by mass of the polyvinyl alcohol-based resin contained in the coating agent.
[6] The coating agent according to any one of [1] to [5] above, wherein the blending amount of the compound (A) is 30 parts by mass or less with respect to 100 parts by mass of the amine-modified polyvinyl alcohol.
[7] The coating agent according to any one of [1] to [6] above, wherein the amine-modified polyvinyl alcohol is a vinyl alcohol-vinyl amine copolymer containing vinyl amine residues and vinyl alcohol residues.
[8] The coating agent according to any one of [1] to [7] above, wherein the polyvinyl alcohol-based resin contained in the coating agent is composed of the amine-modified polyvinyl alcohol or composed of the amine-modified polyvinyl alcohol and a polyvinyl alcohol-based resin other than the amine-modified polyvinyl alcohol.
[9] The coating agent according to any one of [1] to [8] above, wherein the content of the polyvinyl alcohol-based resin is 50 mass% or more based on the total solid content.
[10] The coating agent according to any one of [1] to [9] above, wherein the content of the amine-modified polyvinyl alcohol is 50 mass% or more based on the total solid content.
[11] The coating agent according to any one of [1] to [10] above, wherein the amine modification amount in the polyvinyl alcohol-based resin contained in the coating agent is 1 part by mass or more and 40 parts by mass or less with respect to 100 parts by mass of the polyvinyl alcohol-based resin.
[12] The coating agent according to any one of [1] to [11] above, wherein one of R¹ to R⁶ is a carboxyl group, two or three of R¹ to R⁶ are each a hydroxyl group, and all the remaining are each a hydrogen atom, in formula (1).
[13] The coating agent according to any one of [1] to [12] above, wherein one of R¹¹ to R¹⁸ is a carboxyl group, two or three of R¹¹ to R¹⁸ are each a hydroxyl group, and all the remaining are each a hydrogen atom, in formula (2).
[14] The coating agent according to any one of [1] to [113] above, wherein the compound (A) is at least one selected from the group consisting of dihydroxybenzoic acid, trihydroxybenzoic acid, and dihydroxynaphthoic acid.
[15] A coating film formed from the coating agent according to any one of [1] to [14] above.
[16] A laminate comprising: a base material; and the coating film according to [15] above formed on at least one surface of the base material.
[17] The laminate according to [16] above, further comprising a heat sealing layer.
[18] The laminate according to [17] above, wherein the base material, the coating film, and the heat sealing layer are provided in this order.
[19] The laminate according to any one of [16] to [18] above, wherein the peel strength when the base material with the coating film formed is peeled off from the heat sealing layer provided on the coating film is 2 N/15 mm or more.
[20] The laminate according to any one of [16] to [19] above, wherein the oxygen permeability is 15.0 cc/m²·day·MPa or less.
[21] A laminated packaging material comprising the coating film according to [15] above.
[22] A laminated packaging material comprising the laminate according to any one of [16] to [20] above.

### Advantageous Effects of Invention

According to the present invention, the water resistance of a coating film formed from a coating agent containing an amine-modified polyvinyl alcohol is improved, the coating film does not peel off even when used for various applications, and good gas barrier properties can be maintained.

### Description of Embodiments

Hereinafter, the present invention will be described in detail with reference to embodiments.

### <Coating agent>

The coating agent of the present invention contains an amine-modified polyvinyl alcohol and a compound (A).

### [Amine-modified polyvinyl alcohol]

An amine-modified polyvinyl alcohol is a modified polyvinyl alcohol having an amino group. The coating agent can have enhanced gas barrier properties of a coating film formed from the coating agent and improved adhesion to plastic films or the like by containing an amine-modified polyvinyl alcohol.

The amine-modified polyvinyl alcohol is typically a vinyl alcohol-vinyl amine copolymer containing vinyl amine residues and vinyl alcohol residues, may be block copolymers or random copolymers thereof, or may be combinations thereof.

The method for producing the vinyl alcohol-vinyl amine copolymer is not specifically limited, but it can be obtained by copolymerizing N-vinyl amide with vinyl ester to obtain a copolymer composed of N-vinyl amide units and vinyl ester units and hydrolyzing the copolymer obtained. The N-vinyl amide units and vinyl ester units, for example, may be hydrolyzed at a ratio of 70% or more, preferably 90% or more, more preferably 95% or more.

Specific examples of the N-vinyl amide include N-vinylformamide and N-vinylacetamide. Among them, N-vinylformamide is preferable.

Specific examples of the vinyl ester include vinyl acetate, vinyl formate, vinyl propionate, vinyl butyrate, vinyl isobutyrate, vinyl pivalate, vinyl caproate, vinyl caprylate, and vinyl neodecanoate. Among these, vinyl acetate is preferable.

In a vinyl alcohol-vinyl amine copolymer, the molar ratio of vinyl amine residues to vinyl alcohol residues (vinyl amine residues/vinyl alcohol residues) is not specifically limited but is, for example, 1/99 or more and 50/50 or less, preferably 3/97 or more and 40/60 or less, more preferably 5/95 or more and 25/75 or less. The vinyl alcohol-vinyl amine copolymer tends to have an improved adhesion to plastic films or the like by increasing the ratio of vinyl amine residues. Further, it is easier to develop good gas barrier properties by increasing the amount of vinyl alcohol residues.

The vinyl alcohol-vinyl amine copolymer typically has the following structure. 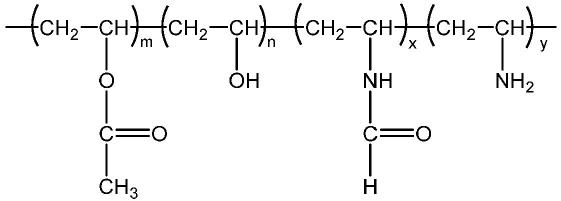 wherein m is 0 mol% or more and 15 mol% or less, n is 50 mol% or more and 99 mol% or less, x is 0 mol% or more and 30 mol% or less, and y is 1 mol% or more and 50 mol% or less, based on all structural units.

The amine-modified polyvinyl alcohol preferably has an aqueous solution viscosity at 23°C and 4 mass% concentration of 100 mPa·s or less, more preferably 50 mPa·s or less, further preferably 20 mPa·s or less. Further, it is preferably 2 mPa s or more, preferably 3 mPa·s or more, further preferably 4 mPa s or more. The aqueous solution viscosity at 4 mass% concentration is measured with a B-type viscometer according to the method of JIS-Z-8803:2011.

In one embodiment, the amine-modified polyvinyl alcohol may be the main component in the coating agent. In such a case, the content of the amine-modified polyvinyl alcohol is, for example, 50 mass% or more, preferably 60 mass% or more, more preferably 70 mass% or more, further preferably 75 mass% or more, in the coating agent based on the total solid content. When the content of the amine-modified polyvinyl alcohol is the lower limit or more, suitable gas barrier properties can be imparted to the coating film formed from the coating agent. Further, the adhesion to plastic base materials or the like tends to be good. The total solid content means the total amount of all components other than the liquid medium contained in the coating agent.

Further, the content of the amine-modified polyvinyl alcohol is preferably 94 mass% or less, more preferably 92 mass% or less, further preferably 90 mass% or less, based on the total solid content. When the content of the amine-modified polyvinyl alcohol is the upper limit or less, it is easy to allow the coating agent to contain the compound (A), which will be described later in a desired amount.

In the coating agent of the present invention, an amine-modified polyvinyl alcohol may be used alone as a polyvinyl alcohol-based resin, or a polyvinyl alcohol-based resin other than the amine-modified polyvinyl alcohol may be contained in addition to the amine-modified polyvinyl alcohol. The polyvinyl alcohol-based resin other than the amine-modified polyvinyl alcohol is preferably mixed with the amine-modified polyvinyl alcohol so as to have the amine modification amount, which will be described later.

Therefore, a coating agent according to another preferable embodiment preferably contains a polyvinyl alcohol-based resin as the main component. In this case, in the coating agent, the content of the polyvinyl alcohol-based resin (that is, the total content of the amine-modified polyvinyl alcohol and the other polyvinyl alcohol-based resin) is, for example, 50 mass% or more, preferably 60 mass% or more, more preferably 70 mass% or more, further preferably 75 mass% or more, based on the total solid content. When the content of the polyvinyl alcohol-based resin is the lower limit or more, it becomes easier to impart suitable gas barrier properties to the coating film and to enhance the adhesion to plastic base materials or the like.

Further, the content of the polyvinyl alcohol-based resin is preferably 94 mass% or less, more preferably 92 mass% or less, further preferably 90 mass% or less, based on the total solid content. When the content of the polyvinyl alcohol-based resin is the upper limit or less, it is easy to allow the coating agent to contain the compound (A), which will be described later in a desired amount.

The amine modification amount in the polyvinyl alcohol-based resin contained in the coating agent is, for example, 1 part by mass or more and 40 parts by mass or less, preferably 2 parts by mass or more and 30 parts by mass or less, more preferably 3 parts by mass or more and 20 parts by mass or less, further preferably 6 parts by mass or more and 18 parts by mass or less, with respect to 100 parts by mass of the polyvinyl alcohol-based resin. When the amine modification amount is adjusted within the aforementioned range, it is easier to improve the gas barrier properties and the adhesion to plastic films or the like, while enhancing the water resistance. The amine modification amount means the content of structural units having an amine group (typically, vinyl amine residues) with respect to 100 parts by mass of the polyvinyl alcohol-based resin.

### [Compound (A)]

The compound (A) is at least one compound selected from the group consisting of a compound (A1) represented by formula (1) below and a compound (A2) represented by formula (2) below. 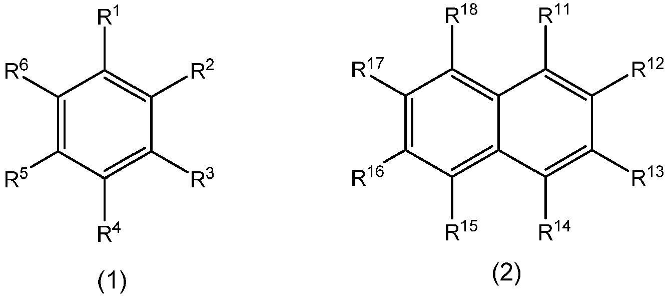 wherein in formula (1), R¹ to R⁶ each independently represent any of substituents such as a carboxyl group, a sulfo group (-SOsH), a hydroxyl group, a hydrogen atom, an alkyl group having 1 to 6 carbon atoms, an aryl group having 6 to 12 carbon atoms, and a halogen atom, one of R¹ to R⁶ is a carboxyl group or a sulfo group, two or three of R¹ to R⁶ are each a hydroxyl group. In formula (2), R¹¹ to R¹⁸ each independently represent any of substituents such as a carboxyl group, a sulfo group, a hydroxyl group, a hydrogen atom, an alkyl group having 1 to 6 carbon atoms, an aryl group having 6 to 12 carbon atoms, and a halogen atom, one of R¹¹ to R¹⁸ is a carboxyl group or a sulfo group, and two or three of R¹¹ to R¹⁸ are each a hydroxyl group.

The compound (A) appropriately crosslinks the amine-modified polyvinyl alcohol by having a structure in which a plurality of hydroxyl groups and one carboxyl group or sulfo group are bound to an aromatic ring. Therefore, it is possible to enhance the water resistance by introducing a crosslinked structure to the coating film formed from the coating agent, and thus to maintain good gas barrier properties even when used in an environment in contact with water without peeling off of the coating film.

Further, a general crosslinking agent having a high crosslinking effect may cause yellowing or browning due to a ketone group generated, but the compound (A) tends to suppress yellowing, browning, or the like during crosslinking and thus tends to enhance the appearance of the coating film formed from the coating agent. Furthermore, the compound (A) is highly safe, thus can be used also as a food additive depending on its structure, and can be suitably used for food applications. The coating agent containing the amine-modified polyvinyl alcohol and the compound (A) is relatively resistant to gelation and has good handleability.

The alkyl group in R¹ to R⁶ and R¹¹ to R¹⁸ is preferably an alkyl group having 1 to 4 carbon atoms, more preferably an alkyl group having 1 or 2 carbon atoms.

The alkyl group may be linear but may have a branched structure or a cyclic structure. Specific examples of the alkyl group include a methyl group, an ethyl group, a propyl group, an isopropyl group, a n-butyl group, an isobutyl group, a sec-butyl group, a tert-butyl group, a n-pentyl group, a n-hexyl group, and a cyclohexyl group. Among these, a methyl group and an ethyl group are more preferable, and a methyl group is further preferable.

The aryl group in R¹ to R⁶ and R¹¹ to R¹⁸ is preferably an aryl group having 6 to 9 carbon atoms. The aryl group may be a phenyl group or a naphthyl group or may be an alkyl-substituted aryl group such as a tolyl group, a xylyl group, an ethylphenyl group, and a methylnaphthyl group.

Examples of the halogen atom in R¹ to R⁶ and R¹¹ to R¹⁸ include a fluorine atom, a chlorine atom, a bromine atom, and an iodine atom.

In formula (1), it is preferable that one of R¹ to R⁶ is a carboxyl group or a sulfo group, two or three of R¹ to R⁶ are each a hydroxyl group, and all the remaining are each a hydrogen atom. Preferred specific examples of the compound (A1) include dihydroxybenzenesulfonic acid, trihydroxybenzenesulfonic acid, dihydroxybenzoic acid, and trihydroxybenzoic acid. Further, in formula (1), it is more preferable that one of R¹ to R⁶ is a carboxyl group, that is, dihydroxybenzoic acid or trihydroxybenzoic acid.

Further, in formula (2), it is preferable that one of R¹¹ to R¹⁸ is a carboxyl group or a sulfo group, two or three of R¹¹ to R¹⁸ are each a hydroxyl group, and all the remaining are each a hydrogen atom. Among these, it is more preferable that two of R¹¹ to R¹⁸ are each a hydroxyl group. Further, it is more preferable that one of R¹¹ to R¹⁸ is a carboxyl group.

Examples of the compound (A2) shown in formula (2) include dihydroxynaphthalenesulfonic acid and dihydroxynaphthoic acid. Among them, dihydroxynaphthoic acid is preferable.

Further, specific examples of the compound (A2) include 1,4-dihydroxy-2-naphthoic acid, 3,5-dihydroxy-2-naphthoic acid, and 3,7-dihydroxynaphthoic acid.

Further, dihydroxynaphthoic acid is preferably a compound in which two hydroxy groups and one carboxylic acid are present in the same ring, for improving the crosslinkability. Specific examples of the compound include 1,4-dihydroxy-2-naphthoic acid.

The compound (A) is preferably the compound (A1) represented by formula (1). Among them, at least one benzoic acids selected from the group consisting of dihydroxybenzoic acid and trihydroxybenzoic acid is more preferable. Use of dihydroxybenzoic acid and trihydroxybenzoic acid tends to enhance the water resistance of the coating formed from the coating agent more. Further, these benzoic acids are highly safe and can be suitably used for food applications. Furthermore, yellowing or browning of the coating film and gelation of the coating agent also tend to be less likely to occur.

Dihydroxybenzoic acid and trihydroxybenzoic acid vary in performance such as water resistance depending on the positions of hydroxyl groups and carboxyl groups. Preferable specific examples of the compound (A) include 2,3-dihydroxybenzoic acid, 2,4-dihydroxybenzoic acid, 2,5-dihydroxybenzoic acid, 2,6-dihydroxybenzoic acid, 3,4-dihydroxybenzoic acid, 3,5-dihydroxybenzoic acid, 2,4,6-trihydroxybenzoic acid, and 3,4,5-trihydroxybenzoic acid, in view of the water resistance or the like.

Among them, 2,4-dihydroxybenzoic acid, 3,4-dihydroxybenzoic acid, 3,5-dihydroxybenzoic acid, 3,4,5-trihydroxybenzoic acid, and 2,4,6-trihydroxybenzoic acid are preferable. Among them, 2,4-dihydroxybenzoic acid, 3,4-dihydroxybenzoic acid, 3,5-dihydroxybenzoic acid, and 2,4,6-trihydroxybenzoic acid are more preferable, and 3,4-dihydroxybenzoic acid, 3,5-dihydroxybenzoic acid, and 2,4,6-trihydroxybenzoic acid are particularly preferable, for improving the water resistance while suppressing yellowing and browning.

Further, dihydroxybenzoic acid is preferable for suppressing yellowing and browning more.

One of the compound (A) may be used alone, or two types thereof may be used in combination.

The blending amount of the compound (A) in a coating agent according to one embodiment is preferably 30 parts by mass or less with respect to 100 parts by mass of the amine-modified polyvinyl alcohol. When the blending amount of the compound (A) is 30 parts by mass or less, the water resistance can be enhanced while gelation, yellowing, and browning are made less likely to occur. From these points of view, the blending amount of the compound (A) is more preferably 28 parts by mass or less, further preferably 25 parts by mass or less, even more preferably 20 parts by mass or less, with respect to 100 parts by mass of the amine-modified polyvinyl alcohol.

Further, the blending amount of the compound (A) is preferably 6 parts by mass or more with respect to 100 parts by mass of the amine-modified polyvinyl alcohol. When it is 6 parts by mass or more, the water resistance is easily enhanced. The blending amount of the compound (A) is more preferably 8 parts by mass or more, further preferably 10 parts by mass or more, with respect to 100 parts by mass of the amine-modified polyvinyl alcohol.

As described above, a coating agent according to another embodiment contains as a polyvinyl alcohol-based resin a polyvinyl alcohol-based resin other than the amine-modified polyvinyl alcohol, in addition to the amine-modified polyvinyl alcohol. Accordingly, in a coating agent according to another preferable embodiment, the blending amount of the compound (A) may be 30 parts by mass or less, more preferably 28 parts by mass or less, further preferably 25 parts by mass or less, even more preferably 20 parts by mass or less, with respect to 100 parts by mass of the polyvinyl alcohol-based resin contained in the coating agent, for enhancing the water resistance while making gelation, yellowing, and browning less likely to occur. Further, the blending amount of the compound (A) is preferably 6 parts by mass or more, more preferably 8 parts by mass or more, further preferably 10 parts by mass or more, with respect to 100 parts by mass of the polyvinyl alcohol-based resin, for easily enhancing the water resistance.

### [Other components]

The coating agent of the present invention may contain additives other than the compound (A) and may contain an inorganic layered compound, for example. The inorganic layered compound is an inorganic compound in which extremely thin unit crystalline layers are superimposed to form one layered particle.

Typical examples of the inorganic layered compound include hydrous silicates such as phyllosilicate minerals. Examples thereof include kaolinite clay minerals such as halloysite, kaolinite, endellite, dickite, and nacrite, antigorite clay minerals such as antigorite and chrysotile, smectite clay minerals such as montmorillonite, beidellite, nontronite, saponite, hectorite, sauconite, and stevensite, vermiculite clay minerals such as vermiculite, and mica or mica clay minerals such as white mica, phlogopite, margarite, tetrasilic mica, and tainiolite.

One of these inorganic layered compounds may be used alone, or two or more of them may be used in combination. Among these inorganic layered compounds, smectite clay minerals such as montmorillonite and mica clay minerals such as water swelling mica are preferable.

The content of the inorganic layered compound in the coating agent is, for example, 5 mass% or more and 35 mass% or less, preferably 8 mass or more and 30 mass% or less, based on the total solid content.

The coating agent may contain components other than the inorganic layered compound as additives other than the compound (A) as long as the effects of the present invention are not impaired. Examples of such additives include additives such as antioxidants, weathering agents, heat stabilizers, lubricants, crystal nucleating agents, ultraviolet absorbers, plasticizers, antistatic agents, colorants, fillers other than the inorganic layered compound, defoamers, silane coupling agents, and surfactants.

Further, the resin component constituting the coating agent may be the amine-modified polyvinyl alcohol alone but may contain a resin component other than the amine-modified polyvinyl alcohol, for example, a hydroxyl group-containing resin other than the amine-modified polyvinyl alcohol, as long as the effects of the present invention are not impaired. Specifically, a polyvinyl alcohol-based resin other than the amine-modified polyvinyl alcohol can be mentioned.

The polyvinyl alcohol-based resin other than the amine-modified polyvinyl alcohol is not specifically limited, but examples thereof include an undenatured polyvinyl alcohol. The undenatured polyvinyl alcohol is obtained by saponifying polyvinyl ester and may consist of vinyl alcohol residues, or vinyl alcohol residues and vinyl ester residues.

### [Liquid medium]

The coating agent of the present invention preferablycontains a liquid medium such as water and an organic solvent and is preferably diluted with the liquid medium. The aforementioned components constituting the coating agent are preferably dissolved or dispersed in the liquid medium.

Examples of an organic solvent used for the liquid medium include monovalent alcohols, glycols, dimethylformamide, dimethylsulfoxide, and acetone. Examples of the monovalent alcohols include methanol, ethanol, propanol, isopropanol, and butanol. The organic solvent is preferably ethanol and isopropanol. Use of ethanol and isopropanol accelerates drying of the amine-modified polyvinyl alcohol and the compound (A), and they are highly safe and can be suitably used for food applications.

The coating agent is preferably an aqueous coating agent using water as the liquid medium. Use of water as the liquid medium makes it easy to dissolve the amine-modified polyvinyl alcohol or the like in the liquid medium, and it is highly safe and can be suitably used for food applications.

In the aqueous coating agent, water alone may be used as the liquid medium, but water and an organic solvent may be used in combination as a mixed medium, in view of the drying time of the coating agent, the stability of the coating agent, and the solubility of each component into the coating agent. The organic solvent to be used in combination at this time is not specifically limited but is preferably a monovalent alcohol. Among them, ethanol is more preferable. The mass ratio of water to the organic solvent in the mixed medium (water/organic solvent) is not specifically limited but is, for example, 30/70 or more and 95/5 or less, preferably 50/50 or more and 90/10 or less.

Further, the solid content concentration in the coating agent is, for example, 0.5 mass% or more and 20 mass% or less, preferably 1 mass% or more and 12 mass% or less, more preferably 2 mass% or more and 8 mass% or less, in view of the film-forming properties, the handleability, and the solubility of each component.

The coating agent of the present invention can be produced by a general method for producing a coating agent, for example, by adding the amine-modified polyvinyl alcohol, the compound (A), and other components to be blended, as required, to the liquid medium and mixing them.

### <Coating film>

The coating film of the present invention is formed from the aforementioned coating agent. The coating film of the present invention can be formed, for example, by applying the coating agent to the base material and appropriately drying it, as required. In the coating film, the amine-modified polyvinyl alcohol contained in the coating agent may be reacted with the compound (A) to be crosslinked. The compound (A) and the amine-modified polyvinyl alcohol may be already reacted in the coating agent before or may be reacted after being applied to the base material. The coating film of the present invention has a low oxygen permeability and can be suitably used as a gas barrier layer.

The method for applying the coating agent to the base material is not specifically limited and a known method can be used. Examples of the application method include gravure coating, roll coating, doctor knife coating, die coating, bar coating, dipping, spray coating, curtain coating, spin coating, flexographic coating, screen coating, and a coating method using a brush or the like.

Further, the surface of the base material onto which the coating agent is applied may be subjected to surface treatment such as corona treatment, ozone treatment, electron beam treatment, and application of an anchor coating agent, for enhancing the adhesiveness between the base material and the coating film.

Drying the coating agent applied is not specifically limited, and a known method can be used. Drying is preferably performed so that the liquid medium contained in the coating agent is volatilized. Examples of drying include drying by heating, drying by non-heating means such as reduced pressure, and drying by a combination thereof. The drying temperature by heating is, for example, 30 to 150°C, preferably 40 to 100°C. The drying time is, for example, 1 second to 24 hours, more preferably 10 seconds to 60 minutes.

The amount of the coating film formed from the coating agent to be applied is, for example, 0.5 to 5.0 g/m³, preferably 1.0 to 2.0 g/m³, as the total solid content after drying. When the amount falls within such a range, the gas barrier properties and such can be enhanced without increasing the thickness of the coating film more than necessary.

The base material is not specifically limited but is preferably a resin film. Specifically, examples of the resin used for the resin film include polyethylene resins such as low density polyethylene (LDPE), high density polyethylene (HDPE), and linear low density polyethylene (LLDPE), polypropylene resins such as homopolypropylene and random polypropylene, olefin resins such as ethylenepropylene copolymer, ethylene-butene copolymer, ethylene-hexene copolymer, ethylene-octene copolymer, poly-4-methyl pentene-1, cyclic olefin resin, ethylenevinyl acetate copolymer, ethylene-methyl (meth)acrylate copolymer, ethylene-(meth)acrylic acid copolymer, and ionomer resins, ester resins such as polyethylene terephthalate (PET), polybutylene terephthalate, and polyethylene naphthalate, amide resins such as polyamide 6, polyamide 66, metaxylenediamine-adipic acid condensation polymer, and polymethylmethacrylimide, acrylic resins, styrene resins, polyacrylonitrile resins, cellulose resins such as cellophane, polyvinyl chloride resins, polyvinylidene chloride resins, polyvinylidene fluoride resins, and polycarbonate resins.

In the resin film, one of the resins may be used alone, or two or more of the resins may be mixed for use. Further, the resin film may be a multilayer film. For example, it may be a multilayer film in which each layer is formed from a different resin. Further, the resin film may be unstretched or stretched. Specific preferred examples of the stretched film include stretched propylene resin films (OPP films), stretched PET films, and stretched amide resin films.

The resin film is preferably an olefin resin film, an ester resin film, or an amide resin film among the aforementioned examples.

The thickness of the base material is not specifically limited and is, for example, 1 to 500 µm, preferably 5 to 200 µm.

Further, the base material may be used as a heat sealing layer that adheres to other members by thermal fusion by appropriately selecting the type of the thermoplastic resin used as the thermoplastic resin layer. In that case, the resin constituting the base material is preferably an olefin resin.

### <Laminate>

The present invention also provides a laminate comprising a base material and the aforementioned coating film formed on at least one surface of the base material. The coating film is formed from the coating agent, as described above. The coating film may be laminated on the surface of the base material via another layer such as an anchor coat layer and a printed layer, or may be formed directly on the surface of the base material. In the laminate, the coating film may be provided only on one side of the base material, or may be provided on each of both sides of the base material. Further, a resin film or a printed layer may be laminated further on the aforementioned laminate.

Such a laminate having a base material and the coating film has excellent gas barrier properties of the coating film and thus can be used as a gas barrier film.

Further, the laminate preferably includes a heat sealing layer as a separate layer from the aforementioned base material. The heat sealing layer is a layer that can adhere to other layers by thermal fusion and is preferably a thermoplastic resin layer. The thermoplastic resin used for the heat sealing layer is preferably an olefin resin. As the olefin resin, those listed as resins that can be used for the base material can be used, but polyethylene resins such as LDPE and LLDPE are more preferable. The thickness of the heat sealing layer that is a separate layer from the base material is not specifically limited but is, for example, 10 to 500 µm, preferably 20 to 200 µm. When the thickness of the heat sealing layer falls within such a range, suitable heat sealing properties can be imparted to the heat sealing layer without increasing the thickness of the laminate more than necessary.

The heat sealing layer may be provided on the opposite side of the surface of the base material on which the coating film was formed but is preferably provided on the surface side of the base material on which the coating film was formed. That is, the laminate preferably has a layer structure in which the base material, the coating film, and the heat sealing layer are provided in this order. The laminate can adhere to other films or the like by heating via the heat sealing layer, while protecting the coating film from both sides with the base material and the heat sealing layer by having such a layer structure.

An adhesive layer may be provided between the heat sealing layer and the coating film, so that the heat sealing layer may adhere to a surface of the coating film formed on the base material is formed via the adhesive layer. The adhesive layer may be formed from a known adhesive such as an adhesive for dry lamination. The surface of the heat sealing layer to be bonded with the base material may be subjected to surface treatment such as corona treatment, ozone treatment, electron beam treatment, and application of an anchor coating agent, for improving the adhesiveness.

The laminate described above preferably has an oxygen permeability of 15 cc/m²·day·MPa or less, more preferably 12 cc/m²·day·MPa or less, further preferably 10 cc/m²·day·MPa or less, for enhancing the gas barrier properties. A lower oxygen permeability is preferable, and it may be 0 cc/m²·day·MPa or more.

The oxygen permeability is a value measured in an atmosphere of 23°C and 0%RH according to JIS-K-7126-2 (isopiestic method).

In the case where the laminate has the heat sealing layer, and the heat sealing layer is provided on the surface side of the base material on which the coating film is formed, the adhesion of the coating film to the base material, the adhesive layer, or the like, are enhanced, and the laminate strength is also enhanced. The laminate strength in such case is preferably 2 N/15 mm or more, more preferably 4 N/15 mm or more. A higher laminate strength is preferable, and the upper limit is not specifically limited but is, for example, 30 N/15 mm or less. The laminate strength is the peel strength when the base material with coating film formed thereon is peeled off from the heat sealing layer provided on the coating film. The peel strength may be measured under the conditions described in Examples.

### <Laminated packaging material>

In the present invention, the laminated packaging material is a packaging material including the aforementioned coating film. The laminated packaging material may be constituted by the laminate having the coating film and the base material, which has been described above in detail.

The laminated packaging material is preferably a packaging material used while laminated on a member such as a film. From such a point of view, the laminated packaging material preferably has a heat sealing layer. Accordingly, the laminated packaging material is preferably a laminate comprising a base material, a coating film, and a heat sealing layer. Further, it may have a printed layer on the coating film.

The laminated packaging material can be used for packaging applications of various articles but is preferably used for food applications. As described above, since the laminated packaging material (laminate) of the present invention has a low oxygen permeability and good gas barrier properties, the freshness of foods to be packaged can be well maintained over a long period of time by being used for food applications. Further, as described above, because of good water resistance of the coating film, the laminated packaging material can be suitably used for applications where moisture easily adheres, applications for boiling sterilization, packaging of foods containing a large amount of moisture, and the like.

The laminated packaging material may be used in the form of a bag or pouch without any particular limitation. Further, the laminated packaging material may be used by preparing two sheets, or by folding one sheet, superimposing heat sealing layers to each other, and heat sealing heat sealing layers, or superimposing another member and heat sealing them. The laminated packaging material may be formed into a pouch or bag by heat sealing the heat sealing layers to each other and heat sealing the heat sealing layers to another member.

### EXAMPLES

The present invention will be described in detail by way of examples, but the present invention is not limited at all to these examples.

### [Example 1]

25 parts by mass of 2,3-dihydroxybenzoic acid (first grade reagent) as the compound (A) was added to 100 parts by mass of vinyl alcohol-vinyl amine copolymer (product name "Ultiloc (R) 5003", available from SEKISUI SPECIALTY CHEMICALS AMERICA, LLC., with an amine modification amount of 12 parts by mass) as a polyvinyl alcohol-based resin, and the mixture was diluted with a mixed solvent of water and ethanol (water/ethanol (mass ratio) = 2/1) to a 5 mass% solution, to obtain a coating agent.

The coating agent obtained was applied to a corona-treated surface of a biaxially stretched polyamide film ("HARDEN N1102", available from TOYOBO CO., LTD.) having one surface subjected to corona treatment at an application amount after drying of 1.0 g/m² with a wire bar set to an application amount of about 20 g/m² in the solution state, followed by drying in an oven at 80°C for 2 minutes, to form a coating film.

Thereafter, an adhesive for dry lamination (base resin: TAKELAC A-616, curing agent: TAKENATE A65, available from Mitsui Chemicals, Inc.) was applied to the surface of the base material on which the coating film was formed. The base material with an adhesive applied to the surface of the coating film formed on the base material was pasted to the corona-treated surface of an LLDPE film ("LIX L4102", available from TOYOBO CO., LTD. with a thickness of 70 µm) with one surface subjected to corona treatment via an adhesive to obtain a laminated packaging material. The laminated packaging material obtained was allowed to stand in an environment of 40°C for 72 hours to be cured. Thereafter, the laminate film thus produced was cut into a given size, heat sealable LLDPE surfaces were superimposed, and the remaining three sides were heat sealed with one side serving as an opening to produce a pouch for test.

### [Examples 2 to 12 and 16 and Comparative Examples 1 to 3]

The same procedure was conducted in the same manner as in Example 1 except that the type of the compound (A) and the amount to be added were changed as shown in Tables 1 to 4. The compound (A) used in each of Examples and Comparative Examples was a first grade reagent.

### [Examples 13 to 15 and 17]

The same procedure was conducted in the same manner as in Example 1 except that a mixture of vinyl alcohol-vinyl amine copolymer ("Ultiloc (R) 5003") and a polyvinyl alcohol-based resin (product name "SELVOL103", available from SEKISUI SPECIALTY CHEMICALS AMERICA, LLC.) having an amine modification amount as shown in Tables 3 and 4 was used as a polyvinyl alcohol-based resin instead of the vinyl alcohol-vinyl amine copolymer alone, and the type of the compound (A) and the amount to be added were changed as shown in Tables 3 and 4.

Each of Examples and Comparative Examples was evaluated as follows.

### [Oxygen permeability]

For the laminated packaging material obtained in each of Examples and Comparative Examples, the oxygen permeability (cc/(m²·day·MPa)) was measured according to JIS-K-7126-2 (isopiestic method) using an oxygen permeability tester (product name "OXTRAN", available from AMETEK MOCON) in an atmosphere of 23°C and 0%RH.

### [Laminate strength]

For the laminated packaging material obtained in each of Examples and Comparative Examples, the laminate strength was measured by the method according to JIS-K-7127. Specifically, the laminated packaging material was cut into strips with a width of 15 mm, and a polyamide film (base material) with the coating film formed was peeled off from an LLDPE film (heat sealing layer) in an environment at room temperature (23°C) with a tensile tester "TENSILON" at a speed of 200 mm/minute with a T die, to measure a laminate strength (N/15 mm).

### [Water resistance evaluation]

The laminated packaging material obtained in each of Examples and Comparative Examples was sandwiched between two paper wipers (product name "Kimtowel", available from NIPPON PAPER CRECIA CO., LTD.) sufficiently impregnated with water and further sandwiched between two consecutive sides of a A4 size clear file folder, which was allowed to stand at normal temperature (20°C). The state of wrinkles and the state of peeling of the laminated packaging material 1 hour and 8 hours later were observed and evaluated according to the following evaluation criteria.
A: No wrinkles and peeling occurred.
AB: Although wrinkles or peeling occurred slightly, it was at a level at which it could be judged that there was no practical problem.
B: At least one of wrinkles and peeling occurred relatively frequently.
C: Large wrinkles were formed, or the LLDPE film and the polyamide film were completely peeled off, and the level was such that it could not be used practically at all.

### [Yellowing]

The pouch for test obtained in each of Examples and Comparative Examples was compared with a blank to evaluate yellowing by visual observation. Thereafter, it was allowed to stand at normal temperature for 4 weeks, and the appearance after the standing was observed. If there is any change, Tables 1 to 3 also show the evaluation after the standing. A pouch for test produced in the same manner as in Example 1 except that the compound (A) was not contained was used as a blank.
A: The same appearance as blank.
B: A little more yellowing than the blank occurred, but the level was not problematic in terms of appearance.
C: Clearly more yellowing or browning than the blank occurred, and the appearance was at a level that could not be used practically.

**[Table 1]**

| | | Example 1 | Example 2 | Example 3 | Example 4 | Example 5 |
|---|---|---|---|---|---|---|
| Amine modification amount (parts by mass) | | 12 parts by mass | | | | |
| Compound (A) | Type | 2,3-Dihydroxybenzoic acid | 2,4-Dihydroxybenzoic acid | 2,5-Dihydroxybenzoic acid | 2,6-Dihydroxybenzoic acid | 3,4-Dihydroxybenzoic acid |
| | Amount added | 25 parts by mass | 25 parts by mass | 25 parts by mass | 25 parts by mass | 25 parts by mass |
| Oxygen permeability | cc/m²·day·MPa (23°C dry) | 4 | 9 | 1 | 5 | 1 |
| Laminate strength | N/15 mm width | 10.7 | 10.8 | 10.8 | 10.8 | 10.4 |
| Water resistance | 1 hrs/8hrs | A/C | A/A | A/B | AB/C | A/A |
| Yellowing | | A | A | A | A | A |

**[Table 2]**

| | | Example 6 | Example 7 | Example 8 | Example 9 | Example 10 |
|---|---|---|---|---|---|---|
| Amine modification amount (parts by mass) | | 12 parts by mass | | | | |
| Compound (A) | Type | 3,5-Dihydroxybenzoic acid | 3,5-Dihydroxybenzoic acid | 3,5-Dihydroxybenzoic acid | 2,4,6-Trihydroxybenzoic acid | 2,4,6-Trihydroxybenzoic acid |
| | Amount added | 11 parts by mass | 18 parts by mass | 25 parts by mass | 11 parts by mass | 18 parts by mass |
| Oxygen permeability | cc/m²·day·MPa (23°C dry) | 6 | 3 | 1 | 5 | 8 |
| Laminate strength | N/15 mm width | 10.9 | 11 | 10.7 | 10.9 | 10.9 |
| Water resistance | 1 hrs/8hrs | A/A | A/A | A/A | A/A | A/A |
| Yellowing | | A | A | A | A | A |

**[Table 3]**

| | | Example 11 | Example 12 | Example 13 | Example 14 | Example 15 |
|---|---|---|---|---|---|---|
| Amine modification amount (parts by mass) | | 12 parts by mass | | 8 parts by mass | | 4 parts by mass |
| Compound (A) | Type | 2,4,6-Trihydroxybenzoic acid | 3,4,5-Trihydroxybenzoic acid | 3,5-Dihydroxybenzoic acid | 2,4,6-Trihydroxybenzoic acid | 3,5-Dihydroxybenzoic acid |
| | Amount added | 25 parts by mass | 25 parts by mass | 11 parts by mass | 11 parts by mass | 11 parts by mass |
| Oxygen permeability | cc/m²·day·MPa (23°C dry) | 2 | 1 | 1 | 1 | 3 |
| Laminate strength | N/15 mm width | 10.7 | 9.7 | 10.5 | 8.2 | 10.6 |
| Water resistance | 1 hrs/8hrs | A/A | A/A | A/A | A/A | A/C |
| Yellowing | | A→C(After standing) | C | A | B | B |

**[Table 4]**

| | | Example 16 | Example 17 | Comparative Example1 | Comparative Example2 | Comparative Example3 |
|---|---|---|---|---|---|---|
| Amine modification amount (parts by mass) | | 12 parts by mass | 4 parts by mass | 12 parts by mass | | |
| Compound (A) | Type | 1,4-Dihydroxynaphthoic acid | 2,4,6-Trihydroxybenzoic acid | 2-Hydroxybenzoic acid | 3-Hydroxybenzoic acid | 4-Hydroxybenzoic acid |
| | Amount added | 11 parts by weight | 11 parts by mass | 25 parts by mass | 25 parts by mass | 25 parts by mass |
| Oxygen permeability | cc/m²·day·MPa (23°C dry) | 5 | 1 | 5 | 5 | 5 |
| Laminate strength | N/15 mm width | 10.2 | 4 | 9.8 | 10.2 | 10.2 |
| Water resistance | 1 hrs/8hrs | A/B | A/C | C | C | C |
| Yellowing | | A | B | A | A | A |

| | | | | | | |
|---|---|---|---|---|---|---|
| * Comparative Examples 1 to 3 were not subjected to water resistance evaluation 8 hours later. * The amounts added in Tables 1 to 4 are shown by parts by mass of the compound (A) per 100 parts by mass of the polyvinyl alcohol-based resin. | | | | | | |

As shown in Tables 1 to 4 above, the amine-modified polyvinyl alcohol is appropriately crosslinked, and the water resistance of the coating film was good by containing the compound (A) having one carboxyl group and two or three hydroxyl groups bound to an aromatic ring, in each of Examples. Further, the laminate strength was high, thus the adhesion to the base material or the like was good, the oxygen permeability was low, and the gas barrier properties were also good.

To the contrary, since the compound (A) having the specific structure was not contained, the amine-modified polyvinyl alcohol was not appropriately crosslinked, and the water resistance was poor, in each of Comparative Examples.

## Claims

1. A coating agent comprising:
an amine-modified polyvinyl alcohol; and at least one compound (A) selected from the group consisting of a compound (A1) represented by formula (1) below and a compound (A2) represented by formula (2) below: 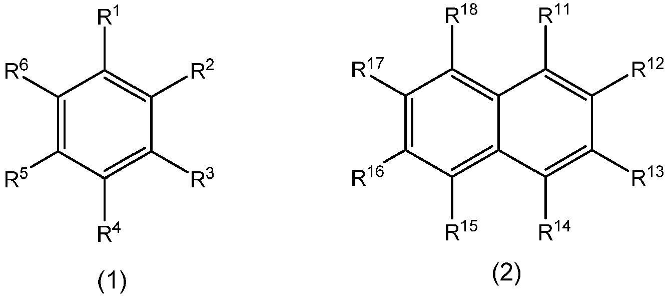
wherein in formula (1), R¹ to R⁶ each independently represent any of a carboxyl group, a sulfo group, hydroxyl group, a hydrogen atom, an alkyl group having 1 to 6 carbon atoms, an aryl group having 6 to 12 carbon atoms, and a halogen atom, one of R¹ to R⁶ is any of a carboxyl group and a sulfo group, and two or three of R¹ to R⁶ are each a hydroxyl group, and
wherein in formula (2), R¹¹ to R¹⁸ each independently represent any of a carboxyl group, a sulfo group, hydroxyl group, a hydrogen atom, an alkyl group having 1 to 6 carbon atoms, an aryl group having 6 to 12 carbon atoms, and a halogen atom, one of R¹¹ to R¹⁸ is any of a carboxyl group and a sulfo group, and two or three of R¹¹ to R¹⁸ are each a hydroxyl group.

2. The coating agent according to claim 1, wherein
the compound (A) is the compound (A1).

3. The coating agent according to claim 2, wherein
the compound (A) is at least one benzoic acids selected from the group consisting of dihydroxybenzoic acid and trihydroxybenzoic acid.

4. The coating agent according to claim 3, wherein
the benzoic acids is at least one selected from the group consisting of 2,4-dihydroxybenzoic acid, 3,4-dihydroxybenzoic acid, 3,5-dihydroxybenzoic acid, 3,4,5-trihydroxybenzoic acid, and 2,4,6-trihydroxybenzoic acid.

5. The coating agent according to any one of claims 1 to 4, wherein
the blending amount of the compound (A) is 30 parts by mass or less with respect to 100 parts by mass of the polyvinyl alcohol-based resin contained in the coating agent.

6. A coating film formed from the coating agent according to any one of claims 1 to 5.

7. A laminated packaging material comprising
the coating film according to claim 6.
